# EUROPEAN PATENT SPECIFICATION

(11) **EP 2 826 301 B1**
(45) Date of publication and mention of the grant of the patent: **17.05.2017**
(21) Application number: 12709319.3
(22) Date of filing: 15.03.2012
(51) Int. Cl.: H04W 36/30, H04W 36/14, H04W 88/06, H04W 92/20, H04W 36/00

(54) **APPARATUS AND METHOD FOR HANDOVER BETWEEN DIFFERENT CARRIER NETWORKS**
VORRICHTUNG UND VERFAHREN ZUR WEITERLEITUNG ZWISCHEN VERSCHIEDENEN TRÄGERNETZWERKEN
APPAREIL ET PROCÉDÉ DE TRANSFERT INTERCELLULAIRE ENTRE DIFFÉRENTS RÉSEAUX PORTEURS

(43) Date of publication of application: 21.01.2015
(73) Proprietor: Nokia Solutions and Networks Oy, 02610 Espoo (FI)
(72) Inventor: MOILANEN, Jani, Matti, Johannes, FI-00200 Helsinki (FI); TOSKALA, Antti, Anton, FI-02180 Espoo (FI)
(74) Representative: Nokia Corporation
(86) International application number: PCT/EP2012/054581
(87) International publication number: WO 2013/135293

(56) References cited:
- EP-A1- 1 482 752
- EP-A1- 1 503 606
- EP-A1- 2 254 356
- US-A1- 2005 094 608
- US-A1- 2011 255 516
- "LTE; Evolved Universal Terrestrial Radio Access (E-UTRA) and Evolved Universal Terrestrial Radio Access Network (E-UTRAN); Overall description; Stage 2 (3GPP TS 36.300 version 10.7.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V10.7.0, 1 March 2012 (2012-03-01), XP014070079,

## Description

### Field

The exemplary and non-limiting embodiments of the invention relate generally to wireless communication networks. Embodiments of the invention relate especially to an apparatus and a method in communication networks where carrier aggregation is utilised.

### Background

In carrier aggregation, user equipment communicates with a communication system using more than one carrier. This method of communication is typically used when large bandwidth is needed. The carriers need not belong to a single communication system. For example, carrier aggregation is proposed between LTE (Long Term Evolution) and HSPA (High Speed Packet Access) systems. When carrier aggregation is utilised, user equipment is able to receive data simultaneously from HSPA and LTE cells. Controlling handovers during carrier aggregation is a difficult task since two different systems are involved. The handover procedure should be as smooth as possible. Documents EP 2 254 356, US 2005/094608, and EP 1 503 606 discuss aspects relating to multiple communication systems.

### Summary

The invention is defined by the independent claims.

Some embodiments of the invention are defined in the dependent claims.

### List of drawings

Embodiments of the present invention are described below, by way of example only, with reference to the accompanying drawings, in which
Figure 1 illustrates an example of carrier aggregation;
Figures 2 and 3 are flowcharts illustrating embodiments of the invention;
Figure 4 illustrates an example of signal flows between network elements; and
Figure 5 illustrates examples of apparatuses applying embodiments.

### Description of some embodiments

Embodiments are applicable to any base station, network element, user equipment (UE), server, corresponding component, and/or to any communication system or any combination of different communication systems that support required functionality.

The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, embodiments.

Many different radio protocols to be used in communications systems exist. Some examples of different communication systems are the universal mobile telecommunications system (UMTS) radio access network (UTRAN or E-UTRAN), HSPA (High Speed Packet Access), long term evolution (LTE, known also as E-UTRA), long term evolution advanced (LTE-A), Wireless Local Area Network (WLAN) based on IEEE 802.11stardard, worldwide interoperability for microwave access (WiMAX), Bluetooth®, personal communications services (PCS) and systems using ultra-wideband (UWB) technology. IEEE refers to the Institute of Electrical and Electronics Engineers. LTE and LTE-A are developed by the Third Generation Partnership Project 3GPP.

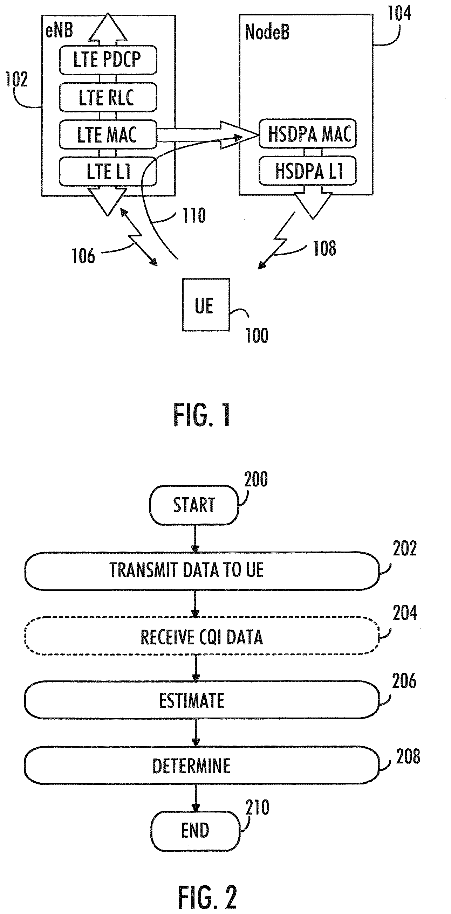

Figure 1 illustrates a simplified view of a communication environment where carrier aggregation is utilised between two communication systems. The figure shows an eNodeB 102 of LTE system and a NodeB 104 of an HSPA system. The eNodeB comprises following logical layers: Layer 1 (LTE L1), Medium Access Control (LTE MAC), Radio Link Control (LTE RLC) and Packet Data Convergence Protocol (LTE PDCP). The NodeB comprises layers Layer 1 (HSDPA L1) and Medium Access Control (HSDPA MAC), where HSDPA denotes High Speed Downlink Packet Access.

In this example, user equipment 100 receives data simultaneously from eNodeB 102 of LTE system and NodeB 104 of HSPA system. This LTE-HSPA carrier aggregation (L-H CA) provides fast load balancing between the two systems. In addition, it allows combining the peak data rates and cell edge data rates of both radio systems and ensures highest possible spectrum utilization when both LTE and HSPA systems are deployed.

In the example of Figure 1, the eNodeB 102 of LTE acts as a master node. The UE 100 receives downlink transmissions 106, 108 from both the eNodeB 102 and NodeB 104. However, all uplink traffic is handled by the eNodeB. Thus, the UE transmit also the HSDPA uplink feedback 110 using LTE uplink. The feedback may comprise hybrid automatic repeat request (Hybrid ARQ or HARQ) acknowledgements and channel quality indication (CQI) messages.

Figure 1 is only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for communication are irrelevant to the actual invention. Therefore, they need not to be discussed in more detail here.

The inter-system measurements between LTE and HSPA are currently based on the Radio Resource Control (RRC) layer signalling message that is created once a specific triggering conditions are fulfilled, which may cause delay for the actual handover event. The regular measurement report from HSPA cells contains only Common Pilot Channel CPICH Received Signal Code Power/Received Signal Strength Indicator RSCP/RSSI (Ec/No) information that is not directly related to the expected data rates to be achieved if moving from LTE to HSPA. Thus a faster trigger for handover is desirable.

The embodiments of the invention are not limited to the above example scenario of Figure 1. For example, the NodeB/Radio Network Controller of HSPA could be the master node and the uplink traffic could be handled by the NodeB.

Figure 2 is a flowchart illustrating an embodiment of the invention. The flowchart describes an example of the operation of a master node, i.e. eNodeB in Figure 1. The embodiment starts at step 200.

In step 202, a first transceiver of a first communication system and a second transceiver of a second communication system are controlled to transmit data to user equipment.

In an embodiment, the first transceiver is controlled to receive data and control information from the user equipment in step 204, the control information comprising channel quality information related to the transmission of data to the user equipment by the first and second transceivers.

In step 206, available throughput of connections with the first and second transceiver is estimated.

In step 208, it is determined on the basis of differences between the estimated throughputs whether it would be beneficial to use only the second transceiver to transmit data to the user equipment.

In an embodiment, it is determined on the basis of the channel quality information and/or observed data throughput based on flow control information whether it would be beneficial to use only the second transceiver to transmit data to the user equipment. The motivation for such decision could be e.g. improved uplink throughput, more efficient network resource utilization, or reduced UE power consumption if the current primary link is not contributing enough to the throughput.

The process ends in step 210.

Step 204 above is not present in all embodiments. For example, in cases where UE transmits uplink to both first and second transceiver, the first transceiver does not receive CQI information regarding the second transceiver connection.

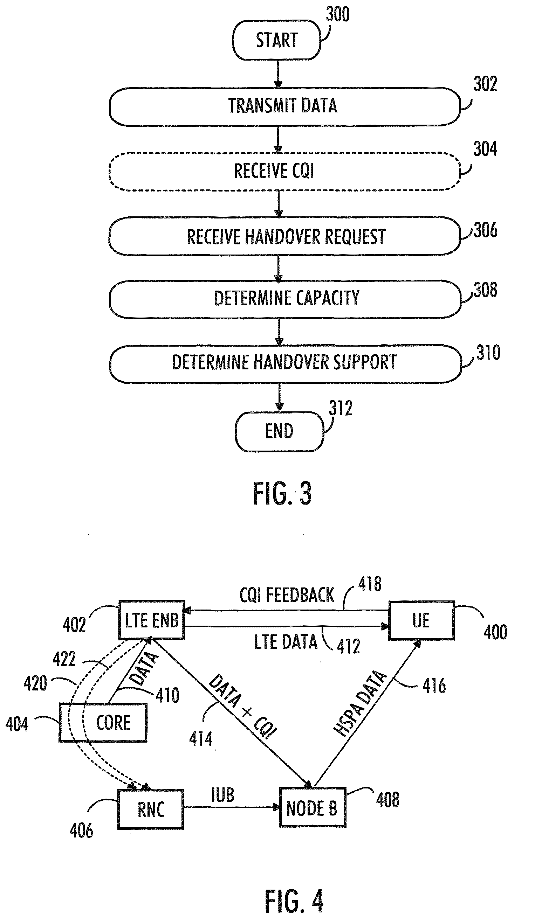

Figure 3 is a flowchart illustrating an embodiment of the invention. The flowchart describes an example of the operation of NodeB in Figure 1. The embodiment starts at step 300.

In step 302, a transceiver is controlled to receive data from another communication system and transmit data to user equipment.

In an embodiment, the transceiver is controlled to receive control information comprising channel quality information in step 304 from the other communication system, the information being related to the transmission of data to the user equipment.

In step 306 a handover request is received from the other communication system. The request comprises information on data throughput and user equipment identification. In an embodiment, the request comprises information on channel quality information.

In step 308, available capacity is determined.

In step 310, it is determined whether the requested handover can be supported.

The process ends in step 312.

Step 304 above is not present in all embodiments. For example, in cases where UE transmits uplink to both to the transceiver and the other communication system second transceiver, the second transceiver does not receive CQI information from the other communication system.

Figure 4 illustrates an embodiment of the invention. Figure illustrates an example of the signal flows between LTE and HSPA network elements and user equipment. The figure shows user equipment 400 which is capable of carrier aggregation between LTE and HSPA systems. From the LTE communication system eNodeB 402 and core network 404 are illustrated. From the HSPA system Radio Network Controller RNC 406 and NodeB 408 are illustrated.

The eNodeBs (Enhanced node Bs) of an LTE communication system may host the functions for Radio Resource Management: Radio Bearer Control, Radio Admission Control, Connection Mobility Control, Dynamic Resource Allocation (scheduling). The core network 404 may comprise several components and it is responsible for the overall UE control in mobility, session/call and state management with assistance of the eNodeBs through which the UEs connect to the network. In addition, it acts as a gateway between the network and other parts of communication network such as the Internet for example.

Radio Network Controller of an HSPA system controls the radio resources of NodeBs connected to it. RNC is the service access point for UEs of the HSPA system. RNC controls NodeBs through IuB interface.

User equipment UE refers to a portable computing device. Such computing devices include wireless mobile communication devices operating with or without a subscriber identification module (SIM), including, but not limited to, the following types of devices: mobile phone, smartphone, personal digital assistant (PDA), tablet computer, laptop computer.

In an embodiment, the LTE eNodeB 402 receives 410 from the core network 404 data to be transmitted to the UE 400. The eNodeB transmits 412 part of the data directly to the UE and part is forwarded 414 to NodeB 408, which transmits 416 the data to the UE using HSPA channels.

The UE 400 is configured to transmit 418 uplink data only to the LTE eNodeB. In addition, UE transmits CQI feedback to the eNodeB. The CQI feedback is related to the transmissions of the eNodeB and NodeB. The eNodeB is configured to forward 414 the CQI related to the NodeB transmission to the NodeB.

In an embodiment, the LTE eNodeB 402 is configured to monitor the throughput of the LTE data 412. The eNodeB may determine on the basis of LTE data throughput and CQI received from the UE if the throughput or CQI in LTE side is below a predetermined threshold or if achievable throughout on the HSPA side would be better. As the eNodeB is aware of the HSPA side throughput is may also be taken into account. Furthermore, as the HSPDA uplink feedback (HARQ acknowledgements and CQIs) are transmitted in LTE uplink 418 the eNodeB is aware of CQI results of the HSPA side and can utilize them in the process.

For example, the situation may be that the on LTE side the data rate is low and expectation based on HSPA CQI (or monitored throughput) is that on the HSPA side the throughput could be clearly better.

In an embodiment, there are other factors in addition to the throughput which may support a handover. These may be, for example, improved uplink throughput, more efficient network resource utilization, or reduced UE power consumption if the current primary link is not contributing enough to the throughput.

If the eNodeB determines that transferring the LTE side data transmission of the carrier aggregation to HSPA side would lead to better throughput it is configured to signal 420 to the RNC 406 in HSPA side the desire for an inter-system handover with the measurement report containing CQI information. The signalling may comprise observed HSPA side throughput based on flow control information between eNodeB and NodeB and indication of the particular UE using LTE/HSPA carrier aggregation in a particular cell. The eNodeB 402 may transmit the signaling 420 via the core network 404 or via a direct interface between the eNodeB and the RNC.

When the RNC receives the request from the eNodeB, it is configured to determine if the available capacity of the HSPA system support the handover and whether an optimized handover process is to be used. As the UE is in connection with both the LTE side and the HSPA side, it has information on the cell parameters of both sides. In an embodiment, if the UE were instructed to perform a handover from LTE to HSPA, it may utilise existing cell parameters of HSPA stored in the UE. This may reduce the handover related signalling. However, if RNC is aware that the cell parameters are in process of changing, it may decide that the handover should be made as a regular handover without reduced signalling.

The RNC is configured to send a response 422 to the handover request to the eNodeB. The response may comprise indication whether the handover may be realized utilizing existing cell information stored in user equipment. If the response was positive the eNodeB sends a handover command to the UE. If the RNC indicated that reduced signalling may be used, the command may instruct the UE to adopt the same HSPA cell parameters it has been using during the cell aggregation reception. If the RNC indicated that reduced signalling cannot be used, the UE is configured to obtain HSPA cell parameters from system information block (SIB) messages transmitted by the NodeB.

Above an example where LTE eNodeB controls the carrier aggregation between LTS and HSPA is described. However, in some embodiments of the invention the controlling network can be HSPA. In such cases, RNC and NodeB of HSPA system control the carrier aggregation. Thus, the UE transmit uplink data and control information including CQI to the NodeB which forwards LTE related CQI to the eNodeB. The eNodeB transmits only downlink data to the UE. The NodeB would be configured to monitor CQI/throughput and trigger handover by sending a local handover indication to eNodeB.

The above example of Figure 4 illustrates an embodiment where UE transmits uplink only to the first transceiver. Embodiments of the invention may also be applied in arrangements where the UE transmits uplink to both first and second transceivers. In such a case the first transceiver controlling the arrangement does not receive CQI information regarding the second transceiver connection. In these cases the handover determination may be based on flow control information, for example.

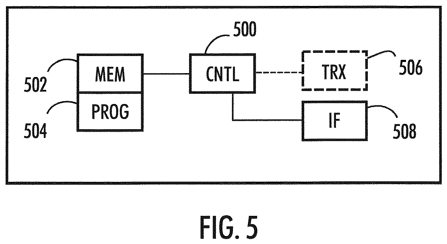

Let us study a simplified example of a device in which embodiments of the invention may be applied wit reference to Figure 5. In some embodiments, the device may a master node controlling the carrier aggregation between two systems or radio access technologies.

It should be understood that the apparatus is depicted herein as an example illustrating some embodiments. It is apparent to a person skilled in the art that the device may also comprise other functions and/or structures and not all described functions and structures are required. Although the device has been depicted as one entity, different modules and memory may be implemented in one or more physical or logical entities.

The device of the example includes a control circuitry 500 configured to control at least part of the operation of the device.

The device may comprise a memory 502 for storing data. Furthermore the memory may store software 504 executable by the control circuitry 500. The memory may be integrated in the control circuitry.

The device may further comprise one or more interfaces 508 operationally connected to the control circuitry 500. The control circuitry is configured to communicate with other network elements through the one or more interfaces 508. For example, if the device is eNodeB or a part of an eNodeB it may communicate with core network, radio network controller and NodeB of HSPA network and other eNodeBs of LTE network. If the device is an RNC or a part of an RNC, it may communicate with core network, other radio network controllers and NodeBs of USPA network and eNodeBs of LTE network. If the device is an RNC or a part of an RNC it may control the transceiver of a NodeB connected to the RNC.

In an embodiment, the device comprises a transceiver 506. The transceiver is operationally connected to the control circuitry 500. It may be connected to an antenna arrangement (not shown).

The control circuitry 500 is configured to execute one or more applications. The applications may be stored in the memory 502. The control circuitry 500 may control a first transceiver of a first communication system and a second transceiver of a second communication system to transmit data to UE and control the first transceiver to receive data and control information from the user equipment, the control information comprising channel quality information related to the transmission of data to the user equipment by the first and second transceivers.

The control circuitry 500 may determine on the basis of the channel quality information and data throughput whether data throughput would be better if only the second transceiver were used to transmit data to the user equipment.

In an embodiment, if the device is an eNodeB or a part of an eNodeB, the first communication system is LTE and the second communication system is HSPA. The first transceiver is a transceiver of the eNodeB and the second transceiver is a transceiver of a NodeB of HSPA.

In an embodiment, if the device is an RNC or a part of an RNC, the first communication system is HSPA and the second communication system is LTE. The first transceiver is a transceiver of a NodeB and the second transceiver is a transceiver of an eNodeB of LTE.

Let us study another simplified example of a device in which embodiments of the invention may be applied wit reference to Figure 5. In some embodiments, the device may a non-master node of a carrier aggregation between two systems or radio access technologies.

It should be understood that the apparatus is depicted herein as an example illustrating some embodiments. It is apparent to a person skilled in the art that the device may also comprise other functions and/or structures and not all described functions and structures are required. Although the device has been depicted as one entity, different modules and memory may be implemented in one or more physical or logical entities.

The device of the example includes a control circuitry 500 configured to control at least part of the operation of the device.

The device may comprise a memory 502 for storing data. Furthermore the memory may store software 504 executable by the control circuitry 500. The memory may be integrated in the control circuitry.

The device may further comprise one or more interfaces 508 operationally connected to the control circuitry 500. The control circuitry is configured to communicate with other network elements through the one or more interfaces 508. For example, if the device is eNodeB or a part of en eNodeB it may communicate with core network, radio network controller and NodeB of USPA network and other eNodeBs of LTE network. If the device is an RNC or a part of an RNC, it may communicate with core network, other radio network controllers and NodeBs of USPA network and eNodeBs of LTE network. If the device is an RNC or a part of an RNC it may control the transceiver of a NodeB connected to the RNC.

In an embodiment, the device comprises a transceiver 506. The transceiver is operationally connected to the control circuitry 500. It may be connected to an antenna arrangement (not shown).

The control circuitry 500 is configured to execute one or more applications. The applications may be stored in the memory 502. The control circuitry 500 may control a transceiver to receive data from another communication system and transmit data to user equipment, control a transceiver to receive control information comprising channel quality information from the other communication system, the information being related to the transmission of data to the user equipment.

The control circuitry may control the reception of a handover request from the other communication system, the request comprising information on channel quality information, data throughput and user equipment identification, determine available capacity; and determine whether the handover can be supported.

In the proposed solution, a handover process may be triggered quickly as there is no need to wait for the inter-systems measurements to take place (event or trigger initiated) which are using Radio Resource Control RRC signaling.

Assuming LTE eNodeB is the master node of the Carrier Aggregation situation, the LTE eNodeB has more information to determine the expected UE specific Quality of Service when moving to HSPA side only operation.

There is more reliable information available in the RNC to understand the expected throughput (compared to the Common Pilot Channel CPICH measurements only). The RNC can send data with existing understanding what is the expected achievable data rate in the NodeB side (since the CQI is now known that takes lot more into account that only the CPICH power.

The existing HSDPA downlink allows also to take specific actions to shorten the actual HSPA connection set-up (degree depends on the detailed LTE/HSDPA Carrier aggregation solution, including if HSPA side uplink would be present or not). No need to wait for specific SIBs to be received for the access.

Above remarks naturally apply also in other situations, such as when the roles of the eNodeB and RNC are reversed. In general, the proposed solution results to faster handover time and shorter break in the data stream with better prediction on Common Pilot Channel after handover.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, or a circuitry which may comprise a working memory (RAM), a central processing unit (CPU), and a system clock. The CPU may comprise a set of registers, an arithmetic logic unit, and a controller. The controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following:
(a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a micro-processor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as technology advances, the inventive concept can be implemented in various ways. The invention and its embodiments are not limited to the examples described above but may vary within the scope of the claims.

## Claims

1. An apparatus in a second communication system (406, 408), wherein the second communication system (406, 408) is different from a first communication system (402), and the first and the second communication systems apply carrier aggregation to transmit data to a user equipment (400), the apparatus comprising:
at least one processor; and
at least one memory including computer program code,
the at least one memory and the computer program code configured to, with the at least one processor, cause the apparatus at least to perform:
control a transceiver to receive part of the data from the first communication system and transmit (302) the received data to the user equipment (400);
control the reception (306) of a handover request from the first communication system, the request being for transferring all of the data to the user equipment (400) only via the second communication system and the request comprising information on channel quality, data throughput and user equipment identification;
determine (308) available capacity in the second communication system; and determine (310) whether the handover can be supported based on the request and the available capacity.

2. The apparatus of claim 1, the apparatus being configured to send information on whether the handover may be supported to the first communication system.

3. The apparatus of claim 1, the apparatus being configured to receive the request through a core network (404), the core network (404) being common to both communication systems.

4. The apparatus of claim 1, the apparatus being configured to receive the request from an apparatus of the first communication system through an interface between the apparatuses.

5. The apparatus of claim 1, the apparatus being configured to determine whether the handover may be realized utilizing existing cell information stored in the user equipment (400).

6. The apparatus of claim 1, wherein the first communication system is a master of the carrier aggregation.

7. The apparatus of claim 1, the apparatus being configured to control the transceiver to receive (304) control information comprising channel quality information from the first communication system, the information being related to the transmission of data to the user equipment (400).

8. A method performed by an apparatus in a second communication system (406, 408) wherein the second communication system (406, 408) is different from a first communication system (402), and the first and the second communication systems apply carrier aggregation to transmit data to a user equipment (400), the method comprising:
controlling a transceiver to receive part of the data from the first communication
system and transmit (302) the received data to the user equipment (400);
controlling the reception (306) of a handover request from the first communication system, the request being for transferring all of the data to the user equipment (400) only via the second communication system and the request comprising information on channel quality, data throughput and user equipment identification;
determining (308) available capacity in the second communication system; and
determining (310) whether the handover can be supported based on the request and the available capacity.

9. The method of claim 8, further comprising: sending information on whether the handover may be supported to the first communication system.

10. The method of claim 8, further comprising:
receiving the request through a core network (404), the core network (404) being common to both communication systems.

11. The method of claim 8, further comprising:
receiving the request from an apparatus of the first communication system through an interface between the apparatuses.

12. The method of claim 8, further comprising:
determining whether a handover may be realized utilizing existing cell information stored in user equipment (400).

13. The method of claim 12, further comprising:
transmitting an acknowledgement of the handover request to the first communication system, wherein the acknowledgement comprises permission to perform the handover utilizing the existing cell information stored in the user equipment (400), in order to enable the first communication system to initiate a transmission of a handover command to the user equipment (400) to utilise the existing cell information.

14. The method of claim 8, further comprising:
controlling a transceiver to receive (304) control information comprising channel quality information from the other communication system, the information being related to the transmission of data to the user equipment (400).

15. A computer program product embodied on a distribution medium readable by a computer and comprising program instructions which, when loaded into an apparatus, execute all the steps of the method according to any of claims 8 to 14.

## Patentansprüche

1. Vorrichtung in einem zweiten Kommunikationssystem (406, 408), wobei das zweite Kommunikationssystem (406, 408) von einem ersten Kommunikationssystem (402) verschieden ist und das erste und zweite Kommunikationssystem Trägeraggregation anwenden, um Daten zu einem Benutzergerät (400) zu senden, wobei die Vorrichtung Folgendes umfasst:
mindestens einen Prozessor; und
mindestens einen Speicher, der Computerprogrammcode umfasst,
wobei der mindestens eine Speicher und der Computerprogrammcode dafür ausgelegt sind, mit dem mindestens einen Prozessor die Vorrichtung mindestens zu Folgendem zu veranlassen:
Steuern eines Sendeempfängers, einen Teil der Daten von dem ersten Kommunikationssystem zu empfangen und die empfangenen Daten zu dem Benutzergerät (400) zu senden (302);
Steuern des Empfangs (306) einer Weiterreichungsanforderung von dem ersten Kommunikationssystem, wobei die Anforderung für den Transfer aller Daten zu dem Benutzergerät (400) nur über das zweite Kommunikationssystem gilt und die Anforderung Informationen bezüglich Kanalqualität,
Datendurchsatz und Benutzergerät-Identifikation umfasst;
Bestimmen (308) verfügbarer Kapazität in dem zweiten Kommunikationssystem; und
Bestimmen (310), ob die Weiterreichung unterstützt werden kann, auf der Basis der Anforderung und der verfügbaren Kapazität.

2. Vorrichtung nach Anspruch 1, wobei die Vorrichtung ausgelegt ist zum Senden von Informationen darüber, ob die Weiterreichung unterstützt werden kann, zu dem ersten Kommunikationssystem.

3. Vorrichtung nach Anspruch 1, wobei die Vorrichtung ausgelegt ist zum Empfangen der Anforderung mittels eines Kernnetzes (404), wobei das Kernnetz (404) beiden Kommunikationssystemen gemeinsam ist.

4. Vorrichtung nach Anspruch 1, wobei die Vorrichtung ausgelegt ist zum Empfangen der Anforderung von einer Vorrichtung des ersten Kommunikationssystems mittels einer Schnittstelle zwischen den Vorrichtungen.

5. Vorrichtung nach Anspruch 1, wobei die Vorrichtung ausgelegt ist zum Bestimmen, ob die Weiterreichung unter Verwendung von in dem Benutzergerät (400) gespeicherten existierenden Zelleninformationen realisiert werden kann.

6. Vorrichtung nach Anspruch 1, wobei das erste Kommunikationssystem ein Master der Trägeraggregation ist.

7. Vorrichtung nach Anspruch 1, wobei die Vorrichtung ausgelegt ist zum Steuern des Sendeempfängers, Steuerinformationen, die Kanalqualitätsinformationen umfassen, von dem ersten Kommunikationssystem zu empfangen (304), wobei die Informationen die Übertragung von Daten zu dem Benutzergerät (400) betreffen.

8. Verfahren, das durch eine Vorrichtung in einem zweiten Kommunikationssystem (406, 408) ausgeführt wird, wobei das zweite Kommunikationssystem (406, 408) von einem ersten Kommunikationssystem (402) verschieden ist und das erste und zweite Kommunikationssystem Trägeraggregation anwenden, um Daten zu einem Benutzergerät (400) zu senden, wobei das Verfahren Folgendes umfasst:
Steuern eines Sendeempfängers, einen Teil der Daten von dem ersten Kommunikationssystem zu empfangen und die empfangenen Daten zu dem Benutzergerät (400) zu senden (302);
Steuern des Empfangs (306) einer Weiterreichungsanforderung von dem ersten Kommunikationssystem, wobei die Anforderung für den Transfer aller Daten zu dem Benutzergerät (400) nur über das zweite Kommunikationssystem gilt und die Anforderung Informationen bezüglich Kanalqualität,
Datendurchsatz und Benutzergerät-Identifikation umfasst;
Bestimmen (308) verfügbarer Kapazität in dem zweiten Kommunikationssystem; und
Bestimmen (310), ob die Weiterreichung unterstützt werden kann, auf der Basis der Anforderung und der verfügbaren Kapazität.

9. Verfahren nach Anspruch 8, ferner umfassend:
Senden von Informationen, ob die Weiterreichung unterstützt werden kann, zu dem ersten Kommunikationssystem.

10. Verfahren nach Anspruch 8, ferner umfassend:
Empfangen der Anforderung mittels eines Kernnetzes (404), wobei das Kernnetz (404) beiden Kommunikationssystemen gemeinsam ist.

11. Verfahren nach Anspruch 8, ferner umfassend:
Empfangen der Anforderung von einer Vorrichtung des ersten Kommunikationssystems mittels einer Schnittstelle zwischen den Vorrichtungen.

12. Verfahren nach Anspruch 8, ferner umfassend:
Bestimmen, ob die Weiterreichung unter Verwendung von in dem Benutzergerät (400) gespeicherten existierenden Zelleninformationen realisiert werden kann.

13. Verfahren nach Anspruch 12, ferner umfassend:
Senden einer Bestätigung der Weiterreichungsanforderung zu dem ersten Kommunikationssystem, wobei die Bestätigung Erlaubnis umfasst, die Weiterreichung unter Verwendung der in dem Benutzergerät (400) gespeicherten existierenden Zelleninformationen durchzuführen, um es dem ersten Kommunikationssystem zu ermöglichen, eine Übertragung eines Weiterreichungsbefehls zu dem Benutzergerät (400) einzuleiten, die existierenden Zelleninformationen zu verwenden.

14. Verfahren nach Anspruch 8, ferner umfassend:
Steuern eines Sendeempfängers, Steuerinformationen, die Kanalqualitätsinformationen umfassen, von dem ersten Kommunikationssystem zu empfangen (304), wobei die Informationen die Übertragung von Daten zu dem Benutzergerät (400) betreffen.

15. Computerprogrammprodukt, das auf einem computerlesbaren Verteilungsmedium realisiert ist und Programmanweisungen umfasst, die, wenn sie in eine Vorrichtung geladen werden, alle Schritte des Verfahrens nach einem der Ansprüche 8 bis 14 ausführen.

## Revendications

1. Appareil dans un deuxième système de communication (406, 408), dans lequel le deuxième système de communication (406, 408) est différent d'un premier système de communication (402), et les premier et deuxième systèmes de communication appliquent une agrégation de porteuses pour transmettre des données à un équipement utilisateur (400), l'appareil comprenant :
au moins un processeur ; et
au moins une mémoire comportant un code de programme informatique,
ladite mémoire et le code de programme informatique étant configurés pour amener, avec ledit processeur, l'appareil au moins à exécuter les étapes suivantes :
commander à un émetteur-récepteur de recevoir une partie des données à partir du premier système de communication et transmettre (302) les données reçues à l'équipement utilisateur (400) ;
contrôler la réception (306) d'une requête de transfert intercellulaire à partir du premier système de communication, la requête étant destinée à transférer toutes les données à l'équipement utilisateur (400) uniquement par l'intermédiaire du deuxième système de communication et la requête comportant des informations sur une qualité de canal, un débit de données et une identification d'équipement utilisateur ;
déterminer (308) une capacité disponible dans le deuxième système de communication ; et
déterminer (310) si le transfert intercellulaire peut être pris en charge sur la base de la requête et de la capacité disponible.

2. Appareil selon la revendication 1, l'appareil étant configuré pour envoyer des informations indiquant si le transfert intercellulaire peut être pris en charge au premier système de communication.

3. Appareil selon la revendication 1, l'appareil étant configuré pour recevoir la requête par l'intermédiaire d'un réseau d'infrastructure (404), le réseau d'infrastructure (404) étant commun aux deux systèmes de communication.

4. Appareil selon la revendication 1, l'appareil étant configuré pour recevoir la requête à partir d'un appareil du premier système de communication par l'intermédiaire d'une interface entre les appareils.

5. Appareil selon la revendication 1, l'appareil étant configuré pour déterminer si le transfert intercellulaire peut être réalisé en utilisant des informations de cellule existantes stockées dans l'équipement utilisateur (400).

6. Appareil selon la revendication 1, dans lequel le premier système de communication est un maître de l'agrégation de porteuses.

7. Appareil selon la revendication 1, l'appareil étant configuré pour commander à l'émetteur-récepteur de recevoir (304) des informations de commande comportant des informations de qualité de canal à partir du premier système de communication, les informations concernant la transmission de données à l'équipement utilisateur (400).

8. Procédé exécuté par un appareil dans un deuxième système de communication (406, 408) dans lequel le deuxième système de communication (406, 408) est différent d'un premier système de communication (402), et les premier et deuxième systèmes de communication appliquent une agrégation de porteuses pour transmettre des données à un équipement utilisateur (400), le procédé comprenant :
commander à un émetteur-récepteur de recevoir une partie des données à partir du premier système de communication et transmettre (302) les données reçues à l'équipement utilisateur (400) ;
contrôler la réception (306) d'une requête de transfert intercellulaire à partir du premier système de communication, la requête étant destinée à transférer toutes les données à l'équipement utilisateur (400) uniquement par l'intermédiaire du deuxième système de communication et la requête comportant des informations sur une qualité de canal, un débit de données et une identification d'équipement utilisateur ;
déterminer (308) une capacité disponible dans le deuxième système de communication ; et
déterminer (310) si le transfert intercellulaire peut être pris en charge sur la base de la requête et de la capacité disponible.

9. Procédé selon la revendication 8, comprenant en outre : envoyer des informations indiquant si le transfert intercellulaire peut être pris en charge au premier système de communication.

10. Procédé selon la revendication 8, comprenant en outré :
recevoir la requête par l'intermédiaire d'un réseau d'infrastructure (404), le réseau d'infrastructure (404) étant commun aux deux systèmes de communication.

11. Procédé selon la revendication 8, comprenant en outré :
recevoir la requête à partir d'un appareil du premier système de communication par l'intermédiaire d'une interface entre les appareils.

12. Procédé selon la revendication 8, comprenant en outré :
déterminer si un transfert intercellulaire peut être réalisé en utilisant des informations de cellule existantes stockées dans l'équipement utilisateur (400).

13. Procédé selon la revendication 12, comprenant en outré :
transmettre un accusé de réception de la requête de transfert intercellulaire au premier système de communication, l'accusé de réception comportant une permission d'exécuter le transfert intercellulaire en utilisant les informations de cellule existantes stockées dans l'équipement utilisateur (400), pour permettre au premier système de communication d'initier une transmission d'une commande de transfert intercellulaire à l'équipement utilisateur (400) pour utiliser les informations de cellule existantes.

14. Procédé selon la revendication 8, comprenant en outré :
commander à un émetteur-récepteur de recevoir (304) des informations de commande comportant des informations de qualité de canal à partir de l'autre système de communication, les informations concernant la transmission de données à l'équipement utilisateur (400) .

15. Produit programme d'ordinateur stocké sur un support de distribution lisible par un ordinateur et comportant des instructions de programme qui, lorsqu'elles sont chargées dans un appareil, exécutent toutes les étapes du procédé selon l'une quelconque des revendications 8 à 14.
